# EUROPÄISCHE PATENTANMELDUNG

(11) **EP 2 884 051 A1**
(43) Veröffentlichungstag der Anmeldung: **17.06.2015**
(21) Anmeldenummer: 13197187.1
(22) Anmeldetag: 13.12.2013
(51) Int. Cl.: F01D 5/30, F01D 5/32, F01D 11/00, F01D 5/14

(54) **Rotor für eine Strömungsmaschine, Strömungsmaschine, Axialverdichter, Gasturbine und Verfahren zum Herstellen eines Rotors einer Strömungsmaschine**

(71) Anmelder: Siemens Aktiengesellschaft, 80333 München (DE)
(72) Erfinder: Dreymann, Marco, 46240 Bottrop (DE); Porsch, Erik, 47249 Duisburg (DE); Zelmer, Dimitri, 45329 Essen (DE)

(57) **Zusammenfassung**

Mit der Erfindung wird eine Strömungsmaschine bereitgestellt, entlang deren Strömungspfad (13) abwechselnd Reihen aus an einem drehfesten Träger befestigte Leitschaufeln (34) und an einem Rotor (21) befestigte Laufschaufeln (26) aufeinanderfolgen, wobei zumindest eine der Leitschaufelreihen freistehende Leitschaufeln (34) umfasst und eine der dieser Leitschaufelreihe unmittelbar benachbarten Laufschaufelreihen derartige Laufschaufeln (26) umfasst, dass diese jeweils in sich in Axialrichtung erstreckende Haltenuten (24) des Rotors (21) eingesetzt sind. Um eine Strömungsmaschine anzugeben, bei dem auch unmittelbar nebeneinander freistehende Leitschaufeln (34) und in axialen Haltenuten (24) befestigte Laufschaufeln (26) angeordnet sind, wird vorgeschlagen, dass der Rotor (21) einen Strömungskonturring (44) aus Wandsegmenten (46) zur nabenseitigen Begrenzung des Strömungskanals im Bereich freistehender Leitschaufeln (34) umfasst, wobei jedes der in Umfangsrichtung verschieblichen Wandsegmente (46) an zumindest einem in Radialrichtung formschlüssig am Rotor (21) angeordneten Haltesegment (48) befestigt ist.

## Beschreibung

Die Erfindung betrifft im Wesentlichen eine als Turbine oder als Axialverdichter ausgebildete Strömungsmaschine, entlang deren Strömungspfad abwechselnd Reihen aus an einem drehfesten Träger befestigte Leitschaufeln und an einem Rotor befestigte Laufschaufeln aufeinander folgen, wobei zumindest eine der Leitschaufelreihen freistehende Leitschaufeln umfasst und eine der dieser Leitschaufelreihe unmittelbar benachbarten Laufschaufelreihen Laufschaufeln umfasst, die jeweils in sich zumindest teilweise in Axialrichtung erstreckende Haltenuten eingesetzt sind. Weiter betrifft die Erfindung ein Verfahren zum Herstellen eines Rotors eines Verdichters aus mehreren Rotorgrundelementen.

Strömungsmaschinen und Axialverdichter sind in vielfältiger Art und Weise aus dem umfangreichen Stand der Technik bekannt. Grundlegend weisen sie aufeinanderfolgend Schaufelreihen auf, die entweder aus Leitschaufeln gebildet an einem drehfesten Träger befestigt sind. Der Träger kann bspw. als Leitschaufelträger oder auch als Gehäuse ausgestaltet sein. Beides sind ringförmige Gebilde, in dessen Inneren ein Rotor drehbar gelagert ist. Oder die Reihen werden aus Laufschaufeln gebildet, die zumeist an einem Wellenbund des Rotors befestigt sind.

Die Schaufelblätter der Schaufeln sind im ringförmigen Strömungspfad angeordnet, welcher sich in der Regel zwischen dem Träger und dem Rotor axial erstreckt. Zur Befestigung der Leitschaufeln und Laufschaufeln in Reihen sind dabei unterschiedliche Konzepte im Stand der Technik bekannt: Sowohl Leitschaufeln als auch Laufschaufeln können an ihrem entsprechenden Träger (dem Leitschaufelträger oder auch am Rotor) in Umfangsnuten eingeschoben sein. Häufig weisen die Umfangsnuten dann im Querschnitt eine hammerförmige Kontur auf, in welche die korrespondierend ausgeführten Schaufelfüße der Leitschaufeln bzw. Laufschaufeln eingeschoben sind. Bei in Umfangsnuten angeordneten Schaufeln sitzen alle Schaufeln einer Reihe in ein und derselben Nut. Diese Schaufeln werden als Schaufeln mit einem Radialfußdesign bezeichnet. Alternativ ist für Laufschaufeln bekannt, dass anstelle von einer gemeinsamen Umfangsnut für jede Schaufel eine eigene Haltenut vorhanden ist, die sich dann jeweils hauptsächlich in Axialrichtung des Rotors erstreckt. Im letztgenannten Fall sind dann die einander korrespondierenden Konturen von Haltenut und Schaufelfuß schwalbenschwanzförmig oder auch tannenbaumförmig ausgestaltet. Diese Fußkonstruktionen werden nachfolgend als Axialfußdesign bezeichnet.

Dabei sind alle Schaufeln zumindest fußseitig befestigt. Bezogen auf ringförmige Strömungspfade sind somit die Leitschaufeln radial außen an der Strömungspfadbegrenzung befestigt und die Laufschaufeln radial innen.

Sowohl für Laufschaufeln als auch für Leitschaufeln ist es bekannt, das kopfseitige Ende der Schaufelblätter frei enden zu lassen. Diese freistehenden Schaufeln weisen dann Schaufelspitzen auf, die vom Schaufelblatt selber geformt sind. Anstelle dessen ist es ebenso sowohl für Leitschaufeln als auch für Laufschaufeln bekannt, an den kopfseitigen Enden der Schaufelblätter Plattformen vorzusehen, welche mit den Nachbarschaufeln des betreffenden Schaufelkranzes gekoppelt sind. Derartige Schaufeln werden auch als Deckbandschaufeln bezeichnet. Weiterhin ist es für Leitschaufeln bekannt, dass deren kopfseitigen Enden über einen gemeinsamen Innenring starr koppelt werden. Dieser somit nabenseitig angeordnete Innenring bildet gleichzeitig auch die dortige Begrenzung des Strömungspfades.

Es hat sich jedoch herausgestellt, dass bei Strömungsmaschinen, deren Gehäuse eine Teilfuge aufweist, manche Kombinationen dieser unterschiedlichen Konstruktionen nicht oder nur schwer realisierbar sind. Derartige Strömungsmaschinen werden so zusammengesetzt, dass deren mit Schaufeln bestückter Rotor zuerst in eine untere Gehäusehälfte eingelegt wird, wonach der Rotor dann durch Ablegen der oberen Gehäusehälfte auf der unteren zugedeckt wird. Dies ist auch als Radialbauweise bekannt und steht im Gegensatz zu einer Axialbauweise, wie sie bei Flugzeug-Triebwerken Anwendung findet. Bei Strömungsmaschinen in Radialbauweise benötigen freistehende Leitschaufeln eine rotorseitige zumeist rotationssymmetrische Wandfläche am Rotor, die den Spitzen der freistehenden Leitschaufeln gegenüberliegt und lokal den Strömungspfad radial innen begrenzt. Dieses Erfordernis machte bisher an dieser Stelle die Verwendung von Laufschaufeln mit Axialfußdesign unmöglich, da deren Haltenuten an gleicher Stelle einen Freiraum erfordern, um die Laufschaufeln während der Montage zuerst auf den entsprechenden Radius zu positionieren und dann durch die axiale Verschiebebewegung in die betreffende Haltenut einschieben zu können.

Durch die Notwendigkeit des Freiraums seitlich der Haltenut wurde an diesen axialen Positionen zumeist ein Leitschaufeldesign mit Innenring verwendet, wenn unmittelbar daneben Laufschaufeln mit Axialfußdesign verwendet wurden.

Prinzipiell sind Laufschaufeln mit einem Radialfußdesign kostenintensiver zu fertigen im Vergleich zu Laufschaufeln mit Axialfußdesign. Leitschaufelreihen, die kopfseitig einen Innenring aufweisen, sind in der Herstellung und Montage sehr komplex. Zudem sind im Betrieb diese störanfälliger. Weiter ist eine Abdichtung zwischen dem Innenring und dem Rotor erforderlich, was die Komplexität des Systems erhöht, wenn nur geringe Leckagen gewünscht sind.

Weiter hat sich als nachteilig herausgestellt, dass bei freistehenden Leitschaufeln das Aufbringen einer abreibenden Schicht auf dem Rotor im Bereich zwischen zwei Laufschaufelreihen nur aufwändig realisierbar ist und zu einer teuren Fertigung führt.

Aus diesen Gründen besteht der Wunsch, freistehendes Leitschaufeldesign mit Laufschaufeln, die Axialfußdesign aufweisen, an jeder Stelle der Strömungsmaschine verwenden zu können.

Aufgabe der Erfindung ist daher die Bereitstellung eines Rotors für eine vorzugsweise in Radialbauweise gefertigte Strömungsmaschine und eine vorzugsweise in Radialbauweise gefertigte Strömungsmaschine der eingangs genannten Art, bei der insbesondere auch wiederholt freistehende Leitschaufeln einer Leitschaufelreihe unmittelbar benachbart zu in axialen Haltenuten sitzenden Laufschaufeln angeordnet sein können.

Die der Erfindung zugrundeliegende Aufgabe wird mit einem Rotor gemäß Anspruch 1, einer Strömungsmaschine gemäß Anspruch 10, einem Verdichter gemäß Anspruch 11 und einer Gasturbine gemäß Anspruch 12 sowie einem Verfahren zur Herstellung eines Rotors gemäß Anspruch 13 gelöst.

Vorteilhafte Ausgestaltungen sind in den abhängigen Ansprüchen angegeben.

Erfindungsgemäß ist insgesamt vorgesehen, dass die vorzugsweise in Radialbauweise zusammengesetzte Strömungsmaschine einen ringförmigen Strömungspfad umfasst, entlang dessen abwechselnd Reihen aus an einem drehfesten Träger befestigte Leitschaufeln und an einem Rotor befestigte Laufschaufeln aufeinander folgen, wobei zumindest eine der Leitschaufelreihen freistehende Leitschaufeln umfasst und eine unmittelbar zu dieser Leitschaufelreihe benachbarte Laufschaufelreihe Laufschaufeln umfasst, die jeweils in sich zumindest teilweise axial erstreckende Haltenuten des Rotors eingesetzt sind, wobei der Rotor den Spitzen der freistehenden Leitschaufeln gegenüberliegend einen Strömungskonturring umfassend mehrere Wandsegmente aufweist, wobei jedes der Wandsegmente an zumindest einem Haltesegment befestigt ist, welches Haltesegment zur radialen Befestigung Hinterschneidungen des restlichen Rotors hintergreift.

Die Erfindung beruht auf der Erkenntnis, dass der für die Montage der Laufschaufeln am Rotor erforderliche Freiraum - im Längsschnitt entlang der Rotationsachse betrachtet seitlich des Wellenbundes - nach der Montage der Laufschaufeln abgedeckt werden kann. Die mantelförmige Abdeckung erfolgt mit Hilfe des Strömungskonturrings. In einer Strömungsmaschine liegt dann dieser Strömungskonturring den Spitzen der freistehenden Leitschaufeln gegenüber, ohne dass sich ein unverhältnismäßig großer Radialspalt zwischen den Spitzen und dem Strömungskonturring ausbildet. Der Strömungskonturring ist so ausgebildet und in seine Umgebung einpasst, dass dieser einerseits die nabenseitige Begrenzung des Strömungskanals seitlich der Haltenuten formt und andererseits dessen nach außen weisende Fläche stufenfrei an nach außen weisende Flächen der benachbarten nabenseitigen Begrenzung des Strömungspfads anschließt.

Der Strömungskonturring ist modular ausgestaltet und umfasst mehrere Wandsegmente. Mithin können die Wandsegmente den Freiraum zwischen zwei unmittelbar benachbarten Laufschaufelreihen überbrücken und abdecken. Die Wandsegmente sind vorzugsweise als plattenförmige Elemente ausgebildet, die der Umfangskrümmung der nach außen weisenden Fläche der benachbarten nabenseitigen Begrenzung des Strömungspfads entsprechend gebogen sind. Vorzugsweise wird die benachbarte nabenseitige Begrenzung des Strömungspfads vom Wellenbund des Rotors gebildet. Die Wandsegmente, welche aus Metall oder auch aus faserverstärktem Kunststoff ausgebildet sein können, stellen im eingebauten Zustand die nabenseitige Kontur des Strömungspfads der Strömungsmaschine über den gesamten Umfang dar. Um diese einfach, zuverlässig und dauerhaft zu befestigen, werden diese nicht unmittelbar am restlichen Rotor befestigt, sondern mittelbar. Zur mittelbaren Befestigung sind deswegen Haltesegmente radial innerhalb der Wandsegmente angeordnet. Diese überbrücken den radialen Freiraum zwischen der nach innen weisenden Fläche der Wandsegmente bis zu dem Nutgrund des Freiraums, d. h. bis zum restlichen Rotor. Die Haltesegmente, die über eine Kraft- und/oder formschlüssige Verbindung mit den Wandsegmenten verbunden sind, sind formschlüssig am Rotor befestigt.

In Umfangsrichtung ist der Freiraum durch die Haltesegmente lediglich teilweise ausgefüllt. Erfindungsgemäß ist vorgesehen, dass diese so in Umfangsrichtung verschieblich sind, dass bei Fehlen zumindest eines Wandsegments die Haltesegmente so positionierbar sind, dass ein in Umfangsrichtung begrenzter Segment-Freiraum als Montageraum entsteht. Durch diesen Montageraum kann eine Laufschaufel mit Axialfußdesign de-/montiert werden. Die anderen Laufschaufeln lassen sich erst dann de-/montieren, wenn der unvollständige Strömungskonturring und somit auch dessen Montageraum in die entsprechende Umgangsposition gedreht wurde.

Die strukturelle Trennung in Wandsegmente und Haltesegmente ermöglicht eine funktionsgerechte Auslegung und Dimensionierung der jeweiligen Bauteile unter den praktischen Betriebsbedingungen. Weiterhin gewährleistet die Erfindung eine drehzahlstabile Lagerung der Wandsegmente am Rotor, wobei aufgrund der segmentierten Ausgestaltung des Strömungskonturrings die im Betrieb auftretenden Fliehkräfte nur geringe Verformungen der Wandsegmente hervorrufen können. Die zur Sicherung und dauerhaften Befestigung erforderlichen Haltesegmente können dahingehend viel massiver und somit auch gewichtsträchtiger sein als die Wandsegmente. Da erstere jedoch unmittelbar am Rotor befestigt sind, werden deren Gewichtskräfte und Fliehkräfte unmittelbar vom restlichen Rotor getragen.

Aufgrund der vorgeschlagenen Lösung können die Innenringe und Deckbänder an Leitschaufeln entfallen, wodurch gleichzeitig das kostengünstige Axialfußdesign unmittelbar benachbart neben den dann freistehenden Leitschaufeln verwendet werden kann.

Gemäß dem erfindungsgemäßen Verfahren zum Herstellen eines Rotors einer Strömungsmaschine ist vorgesehen, dass vor dem Aneinanderlegen der unmittelbar benachbarten Rotorgrundelemente die Haltesegmente in eine Hinterschneidung des betreffenden Rotorgrundelements eingelegt werden. Da häufig derartige Rotoren einen zentralen oder mehrere dezentrale Zuganker aufweisen und die Rotorgrundelemente als Radscheiben aufeinander gestapelt werden, können bereits während des Stapelns der Rotorgrundelemente die zwischen den betreffenden unmittelbar benachbarten Rotorgrundelementen anzuordnenden Haltesegmente noch vor der Montage der zweiten der beiden Rotorgrundelemente montiert werden. Wegen der Verschieblichkeit der Haltesegmente in Umfangsrichtung ist es trotz des Vorhandenseins der Haltesegmente möglich, ein oder auch mehrere Haltesegmente so zu positionieren, dass für jede der betreffenden Haltenuten der zum Ein- bzw. Ausbau von Laufschaufeln seitlich erforderliche Freiraum abschnittsweise bereitgestellt werden kann.

Mit Hilfe des Verfahrens lässt sich somit ein Rotor einer Strömungsmaschine fertigen, bei dem im Wesentlichen zuerst alle Rotorgrundelemente auf den betreffenden Zuganker aufgefädelt werden und anschließend vom Zuganker verspannt werden. Trotz des Vorhandenseins der dann schon am Rotor verschieblich montierten Haltesegmente ist es dann in einem zweiten Montageschritt möglich, die Laufschaufeln der dem Strömungskonturring benachbarten Reihe zu montieren. Nach der Montage aller Laufschaufeln der Reihe werden dann die fehlenden Wandsegmente befestigt.

Wenn in der vorliegenden Patentmeldung von einem Freiraum seitlich der Haltenuten die Rede ist, so bezieht sich der Begriff "seitlich" auf einen oder beide axial angrenzende Abschnitte desjenigen Wellenbundes, im dem die Haltenuten für Laufschaufeln angeordnet sind.

Gemäß einer ersten vorteilhaften Ausgestaltung sind die Haltesegmente in einer schwalbenschwanz- oder hammerförmigen Umfangsnut des Rotors angeordnet und hintergreifen deren Hinterschneidungen.

Für die Befestigungen der Haltesegmente sind somit unterschiedliche Konstruktionen analog zu der herkömmlichen Befestigung von Laufschaufeln mit Radialfußdesign möglich. Insbesondere bei einem modularen Rotor, der ursprünglich zumindest zwei axial unmittelbar benachbarte Rotorgrundelemente umfasst, deren Kontaktflächen in demjenigen axialen Abschnitt liegen, in denen auch die Spitzen der freistehenden Leitschaufeln angeordnet sind, hat es sich als vorteilhaft erwiesen, wenn die beiden unmittelbar benachbarten Rotorgrundelemente jeweils derartige strukturelle Konturen und Merkmale aufweisen, dass diese gemeinsam die Umfangsnut mit Hinterschneidungen zur Befestigung der Haltesegmente bilden.

Diese Rotorgrundelemente können bspw. auch als sogenannte Radscheiben ausgebildet sein, bei denen die betreffende Radscheibe jeweils eine Reihe von Laufschaufeln an ihrem Außenumfang trägt. Anstelle eines modularen Rotors kann selbstverständlich die Erfindung an einem in diesem Abschnitt durch Schweißen hergestellten monolithischen Rotor angewendet werden.

Nach einer weiteren vorteilhaften Weiterbildung ist beiderseits des betreffenden Wellenbunds ein Strömungskonturring vorgesehen. Dies ermöglicht im Service-Fall durch das Demontieren jeweils eines Wandelements den Zugang zu Montageräumen, um einerseits ein Werkzeug zum Herausdrücken der Laufschaufel darin zu positionieren, welches Werkzeug dann die zu demontierende Schaufel in den andererseits vorhandenen Montageraum hineinschieben kann.

Gemäß einer weiteren vorteilhaften Ausgestaltung der Strömungsmaschine sind die Haltesegmente nach dem Entfernen zumindest eines der Wandsegmente bzw. vor dem Anbringen des letzten Wandsegments entlang der Umfangsrichtung des Rotors verschieblich. Die Verschieblichkeit der Haltesegmente gewährleistet die De-/Montierbarkeit aller Laufschaufeln durch einen verschieblichen Montageraum, welcher zur Montage und Demontage von in Axialnuten befindlichen Laufschaufeln erforderlich ist. Des Weiteren hat die Verschieblichkeit den Vorteil, dass im Störungsfall, wenn bspw. eine einzige Laufschaufel oder nur eine geringe Anzahl an Laufschaufeln auszutauschen ist, lediglich ein Wandsegment der Abdeckung zu entfernen ist, wonach der dadurch von außen zugängliche Montageraum auf jede beliebige Umfangsposition des Rotors gedreht werden kann. Dies reduziert die Aufwände beim Demontieren von Laufschaufeln und verringert insgesamt die Stillstandszeit der Strömungsmaschine.

Gemäß einer weiteren vorteilhaften Ausgestaltung der Erfindung sind die Haltesegmente und/oder die Wandsegmente derartig ausgestaltet, dass diese bei vollständiger Montage aller Haltesegmente bzw. Wandsegmente eine Verschiebung aller Laufschaufeln längs ihrer Haltenut einseitig blockieren. Dies vermeidet das Erfordernis einer separaten Sicherung der Laufschaufeln gegen eine axiale Verschiebung der Laufschaufeln entlang ihrer Halterung.

Vorzugsweise sind die Wandsegmente über zumindest eine, vorzugsweise über mehrere in Umfangsrichtung gleichmäßig verteilte Niet-, Schraub-, Schweiß- oder Bördel-Verbindungen an dem Haltesegment befestigt. Die Mehrfach-Befestigung verhindert einerseits ein ungewolltes Lösen der Wandsegmente von den Haltesegmenten. Gleichzeitig verhindert diese Ausgestaltung ein Aufbiegen der Wandsegmente unter Fliehkraft, so dass deren teilweises Hineinragen in den eigentlichen Strömungspfad des Axialverdichters selbst unter Fliehkrafteinfluss weitestgehend vermieden werden kann.

Vorzugsweise ist die Umfangsnut des Rotors, in der die Haltesegmente eingesetzt sind, schwalbenschwanzförmig ausgestaltet. Diese Art der Verhakung ermöglicht eine geringfügige radiale Verschiebung der Haltesegmente. Damit wird die Montierbarkeit bzw. die Demontierbarkeit der Laufschaufeln weiter verbessert.

Vorzugsweise ist die Anzahl der Wandsegmente identisch mit der Anzahl der Haltesegmente. Dabei ist es möglich, dass jedes Wandsegment an genau einem Haltesegment befestigt ist. Dies ist als versatzfreie Befestigung bezeichnet. Ein Wandsegment kann aber auch an mehreren Haltesegmenten befestigt sein.

Alternativ besteht die Möglichkeit, dass jedes Wandsegment an unmittelbar zwei benachbarten Haltesegmenten befestigt ist, und dass an jedem Haltesegment zwei unmittelbar benachbarte Wandsegmente befestigt sind. Somit sind die Wandsegmente und Haltesegmente versatzweise befestigt, was ebenso eine besonders günstige Befestigung darstellt. Die versatzweise Befestigung von Haltesegmenten und Wandsegmenten bietet sich insbesondere auch dann an, wenn der Rotor monolithisch im Bereich der betreffenden freistehenden Leitschaufeln ausgebildet ist und somit über eine Umfangsnut mit einer Einführöffnung für die Haltesegmente verfügen kann, so wie sie für Laufschaufeln mit Radialfußdesign ohnehin bereits bekannt sind. Insbesondere in diesem Fall ist dann eines der Wandsegmente - zumeist das zuletzt montierte Wandsegment - formschlüssig mit einem der axial angrenzenden Wandbereiche verbunden, so dass der vollständige Strömungskonturring gegen eine Verschiebung in Umfangsrichtung gesichert ist. Dies und/oder die versatzweise Befestigung von Wandsegmenten mit Haltesegmenten verhindert ein Lösen der Haltesegmente durch eine Einführöffnung der Umfangsnut, falls diese zur Montage der Haltelemente an einem monolithischen Rotor vorhanden bzw. erforderlich ist.

Um eine aerodynamisch verlustarme Kontur der Nabe bereitstellen zu können ist vorzugsweise vorgesehen, dass das Wandsegment an jeder Verbindungsstelle derart lokal vertieft ist, dass das Hervorstehen von Verbindungsbestandteilen aus einer nabenseitigen Hüllfläche vermieden ist.

Gemäß einer weiteren vorteilhaften Ausgestaltung sind die Wandsegmente aus Metall oder aus glas- oder kohlenstofffaserverstärktem Kunststoff gefertigt. Die Verwendung von kohlenstofffaserverstärktem Kunststoff (CFK) für die Wandsegmente hat den besonderen Vorteil, dass diese verglichen mit den metallischen Wandsegmenten leichtbauend sind. Dadurch verringert sich die Fliehkraftbelastung bei gleichbleibender Bauteilgeometrie um ca. Faktor 5. Kommt es zum Ablösen eines aus CFK gefertigten Wandsegments während des Betriebs, kann voraussichtlich eine größere Beschädigung der Strömungsmaschine vermieden werden, da CFK eine höhere Sprödigkeit besitzt und beim Aufprall an anderen Bauteilen kleinteilig zerfällt. Dies verhindert Folgebeschädigungen an stromab angeordneten zumeist metallischen Schaufeln. Zudem lassen sich die Wandsegmente im Bereich der faserverstärkten Kunststoffe sehr kostengünstig fertigen.

Von besonderem Vorteil ist, wenn die den Spitzen der Leitschaufeln zugewandte Fläche der Wandsegmente beschichtet ist. Diese Beschichtungen können als abreibende Schicht ausgestaltet sein, wodurch sich Axialverdichter konstruieren lassen, die im Betrieb einen vergleichsweise kleinen Radialspalt aufweisen, da die Spitzen der Leitschaufeln sich in die abreibende Schicht eingraben können. Dies vermindert Strömungsverluste und steigert somit die Effizienz der Strömungsmaschine. Insofern ermöglicht die Erfindung also die erstmalig die Verwendung abreibenden Schichten für Leitschaufeln bei benachbarten Laufschaufeln mit Axialfußdesign.

Die Strömungsmaschine kann beispielsweise als Verdichter, als Turbine oder auch als Gasturbine ausgestaltet sein.

Zwar ist die Notwendigkeit der Verwendung der Erfindung bei einer in Axialbauweise zusammengesetzten Strömungsmaschine nicht derartig groß wie bei einer in Radialbauweise zusammengesetzten Strömungsmaschine, aber dennoch kann die Erfindung auch in der erstgenannten Strömungsmaschine Anwendung finden.

Insgesamt wird mit der Erfindung eine Strömungsmaschine bereitgestellt, entlang deren Strömungspfad abwechselnd Reihen aus an einem drehfesten Träger befestigte Leitschaufeln und an einem Rotor befestigte Laufschaufeln aufeinanderfolgen, wobei zumindest eine der Leitschaufelreihen freistehende Leitschaufeln umfasst und eine der dieser Leitschaufelreihe unmittelbar benachbarten Laufschaufelreihen derartige Laufschaufeln umfasst, dass diese jeweils in sich in Axialrichtung erstreckende Haltenuten des Rotors eingesetzt sind. Um eine Strömungsmaschine anzugeben, bei dem auch wiederholt unmittelbar nebeneinander freistehende Leitschaufeln und in axialen Haltenuten befestigte Laufschaufeln angeordnet sind, wird vorgeschlagen, dass der Rotor einen Strömungskonturring aus Wandsegmenten zur nabenseitigen Begrenzung des Strömungskanals im Bereich freistehender Leitschaufeln umfasst, wobei jedes der in Umfangsrichtung verschieblichen Wandsegmente an zumindest einem in Radialrichtung formschlüssig am Rotor angeordneten Haltesegment befestigt ist.

Die Erfindung und weitere Vorteile werden anhand mehrerer Ausführungsbeispiele näher erläutert. Es zeigen:
- FIG 1: einen Ausschnitt durch den Längsschnitt eines Axialverdichters nach dem Stand der Technik mit freistehenden Laufschaufeln, die in Axialnuten befestigt sind und mit Leitschaufeln, deren kopfseitige Enden an einem Innenring miteinander gekoppelt sind,
- FIG 2: einen Ausschnitt durch den Längsschnitt eines Axialverdichters nach dem Stand der Technik mit freistehenden Leitschaufeln sowie mit freistehenden Laufschaufeln mit Radialfußdesign,
- FIG 3: in perspektivischer Darstellung zwei unmittelbar benachbarte Radscheiben des erfindungsgemäßen Rotors mit jeweils sich axial erstreckende Haltenuten für Laufschaufeln,
- FIG 4: den Längsschnitt durch die beiden unmittelbar benachbarten Radscheiben gemäß FIG 3,
- FIG 5: eine Schnittverlaufsmarkierung eines Wandsegments für FIG 6 und 7,
- FIG 6: die Schnittdarstellung einer Nietverbindung gemäß Schnittlinie A-A aus FIG 5 zwischen Wandsegment und Haltesegment und
- FIG 7: die Schnittdarstellung einer Schraubverbindung zwischen Wandsegment und Haltesegment, ausgestaltet als Bördelmutter bzw. Schweißmutter.

Alle Ausführungsbeispiele erläutern die Erfindung anhand eines Axialverdichters, welcher stellvertretend für beliebige Strömungsmaschinen steht, wobei in allen Figuren identische Merkmale mit den gleichen Bezugszeichen versehen sind.

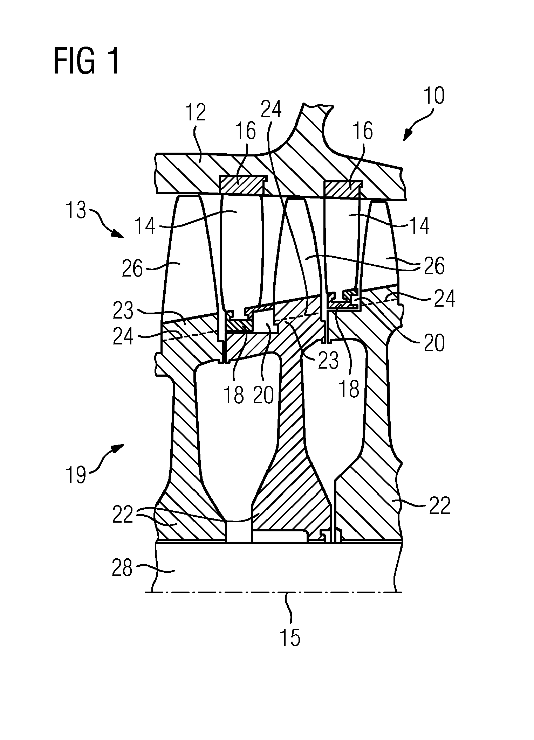

FIG 1 zeigt einen Ausschnitt aus einem Längsschnitt durch einen Axialverdichter 10 des Standes der Technik, bei dem an einem drehfesten Träger 12 Leitschaufeln 14 in Reihen angeordnet sind. Die Leitschaufeln 14 sind mit ihrem Schaufelfuß 16 im Schaufelträger 12 in beliebiger Weise verhakt. An den den Schaufelfüßen 16 gegenüberliegenden Kopfenden der Leitschaufeln 14 sind sogenannte Innenringe 18 vorgesehen, die die Schaufelblätter der Leitschaufeln 14 kranzweise miteinander koppeln. Die Innenringe 18 sind in einem Freiraum 20 angeordnet, der axial zwischen zwei Wellenbunden 23 benachbarter Radscheiben 22 angeordnet ist, in denen jeweils Haltenuten 24 angeordnet sind. In den Haltenuten 24 sind Laufschaufeln 26 eingeschoben. Die Haltenuten 24 erstrecken sich im Wesentlichen in Axialrichtung, d. h. sie können auch gegenüber der Axialrichtung angestellt sein. Die seitlich der Wellenbunde 23 vorhandenen Freiräume 20 ermöglichen bei einem Rotor 19 das nachträgliche Montieren von Laufschaufeln 26. Der Rotor 19 umfasst einzelne Radscheiben 22, die durch einen Zuganker 28 miteinander verspannt sind.

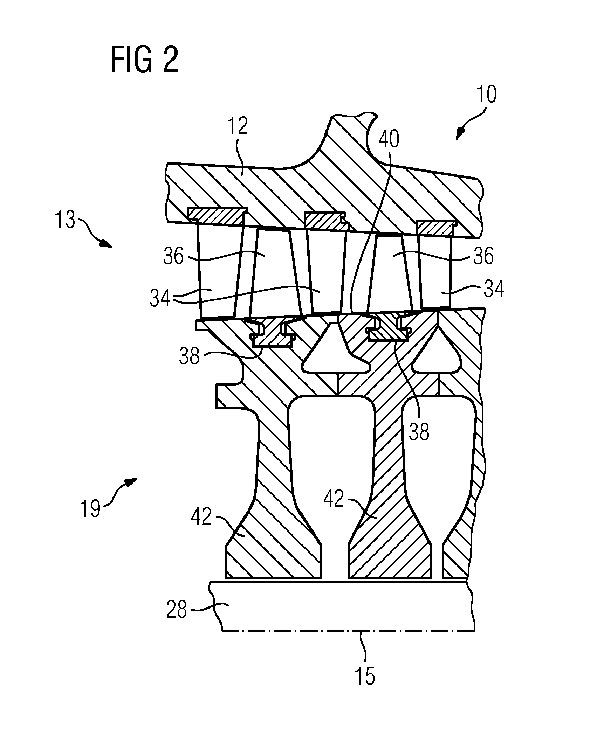

Gemäß FIG 1 bildeten bisher die Innenringe 18 die nabenseitige Begrenzung des Strömungspfades 13 im Bereich der Leitschaufeln 14, wohingegen gemäß FIG 2 die nabenseitige Begrenzung des Strömungspfades 13 von den Außenumfangsflächen 40 der Rotorscheiben 42 gebildet ist.

Um insbesondere bei Axialverdichtern in Radialbauweise anstelle von Leitschaufeln 14 mit Innenringen 18 freistehende Leitschaufeln 34 (FIG 2) verwenden zu können, mussten im Stand der Technik - dargestellt in FIG 2 - die Laufschaufeln 36 in Umfangsnuten 38 angeordnet werden, welche an den Außenumfangsflächen 40 der Rotorscheiben 42 vorgesehen sind. Die Außenumfangsflächen 40 der Rotorscheiben 42 begrenzen auch abseits der Laufschaufeln 36 den Strömungspfad 13 des Verdichters 10, welcher im Querschnitt ringförmig ausgestaltet ist und in dem die Schaufelblätter der Schaufeln 14, 26, 34, 36 zur Verdichtung des Arbeitsmediums angeordnet sind. Wie aus den Figuren 1 und 2 hervorgeht, sind die Reihen konzentrisch zu einer Mittelachse 15 angeordnet.

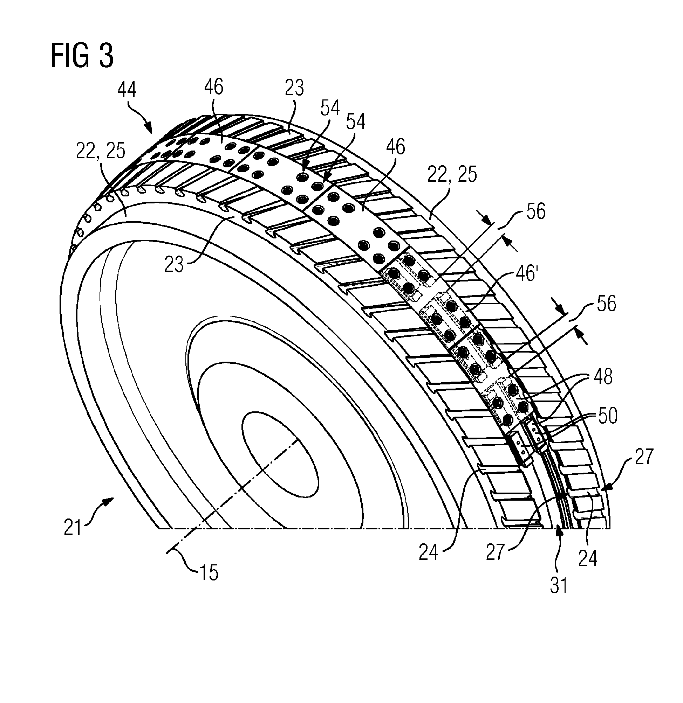

Um nun die in FIG 1 dargestellten Laufschaufeln 26 mit Axialfußdesign unmittelbar neben freistehenden Leitschaufeln 34 gemäß FIG 2 in Strömungsmaschinen insbesondere mit Radialbauweise anwenden zu können, wird die in den Figuren 3 bis 7 dargestellte Ausgestaltung eines Rotors 21 vorgeschlagen.

Der Übersicht halber sind in den Figuren 3 bis 7 jedoch die Laufschaufeln nicht dargestellt, allein deren Haltenuten 24 sind schematisch dargestellt. Das nachfolgende Ausführungsbeispiel wird anhand eines Rotors 21 geschildert, welcher mehrere Rotorgrundelemente 25, nachfolgend Radscheiben 22 genannt, aufweist. Nichts desto trotz ist dies nicht limitierend. Die Erfindung ist selbstverständlich auch für in diesem Bereich monolithische Rotoren 21 anwendbar.

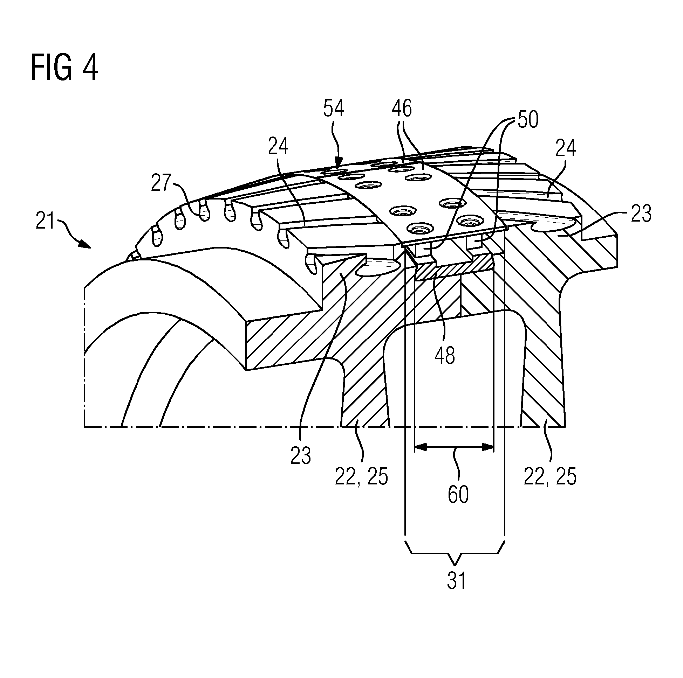

Gemäß dem in den Figuren 3 und 4 dargestellten Ausführungsbeispiel umfasst der Rotor 21 zumindest zwei unmittelbar benachbarte Rotorgrundelemente 25, die als Radscheiben 22 ausgestaltet sind. An den Radscheiben 22 ist außen jeweils ein Wellenbund 23 vorgesehen, in dem die üblicherweise zur Axialrichtung schräg stehenden Haltenuten 24 angeordnet sind. Seitlich der Wellenbunde 23 ist ein Freiraum 31 vorhanden, welcher erforderlich ist, um die Laufschaufeln 26 in Haltenuten 24 einzuschieben. Die Freiräume 31 können in denjenigen axialen Abschnitten des Rotors 21 angesiedelt sein, in welche sich beide Radscheiben 22 axial hinein erstrecken. Nach der Montage der nicht dargestellten Laufschaufeln in den Haltenuten 24 sind die Zugänge zu den Freiräumen 31 mit Hilfe der Erfindung flächig und für die Strömung stufenlos abzudecken.

Die Abdeckung erfolgt mit Hilfe eines Strömungskonturrings 44, der aus einer Vielzahl von Wandsegmenten 46 gebildet ist. Jedes Wandsegment 46 kann sich beispielsweise über einen Bogen von 20° erstrecken. Zur Bildung des Strömungskonturrings 44 sind dann achtzehn Wandsegmente 46 erforderlich. Anstelle dessen könnte der Strömungskonturring 44 auch nur zwei Wandsegmente umfassen, ein erstes mit einer Bogenlänge von 315° und ein zweites mit einer Bogenlänge von 45°. Weitere Ausgestaltungen sind denkbar.

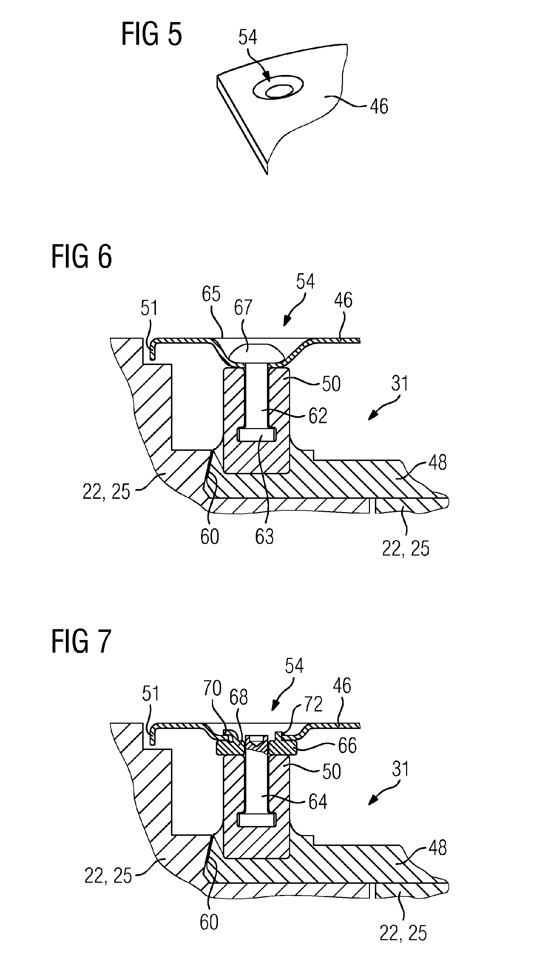

Die Wandsegmente 46 werden an dem Rotor 21 mit Hilfe von Haltesegmenten 48 befestigt. Je nach Ausgestaltung können mehrere Haltesegmente 48 je Wandsegment 46 vorgesehen sein. Es kann aber auch nur ein einziges Haltesegment 48 je Wandsegment 46 vorgesehen sein. Die Wandsegmente 46 sind im Bereich des Freiraums 31 über eine schwalbenschwanzförmige Verbindung zwischen den beiden unmittelbar benachbarten Radscheiben 22 formschlüssig gehalten, so dass deren Verlust trotz der auf sie einwirkenden Fliehkräfte sicher vermieden ist. Die Haltesegmente 48 sind prinzipiell ebenso plattenförmig ausgebildet, jedoch weisen sie an ihren nach außen weisenden Flächen zwei in Umfangsrichtung verlaufende Schienen 50 (FIG 6, 7) auf, an denen die Wandsegmente 46 befestigt werden können. Gemäß FIG 4 ist jedes Wandsegment 46 an zwei mal vier Verbindungsstellen 54 mit dem Haltesegment 48 verbunden. Dazu ist jedes Wandsegment 46 an jeder Verbindungsstelle 54 geringfügig vertieft, um ein Herausragen von Verbindungsbestandteilen in den Strömungspfad des Verdichters zu vermeiden.

Wie aus einem in FIG 3 nur transparent dargestellten Wandsegment 46' ersichtlich, ist zwischen den einzelnen verschieblichen Haltesegmenten 48 ein Spalt 56 vorhanden, so dass jedes einzelne Haltesegment 48 in Umfangsrichtung geringfügig verschiebbar ist. Damit lassen sich entlang des Umfangs derartig große Spalte 56 herbeiführen, so dass ein Montageraum entsteht.

Gemäß dem in FIG 3 dargestellten Ausführungsbeispiel ist an jedem Haltesegment 48 lediglich ein Wandsegment 46 befestigt.

FIG 5 zeigt die Schnittverlaufsmarkierung A-A im Wandsegment 46 in einer perspektivischen Darstellung.

FIG 6 zeigt den Querschnitt durch eine Nietverbindung zwischen Wandsegment 46 und Haltesegment 48. Die unmittelbar aneinanderliegenden Radscheiben 22 sind nur bruchstückhaft dargestellt. Beide Radscheiben 22 weisen im Bereich des von ihnen gemeinsam begrenzten Freiraums 31 derartige Strukturen auf, dass sie gemeinsam eine schwalbenschwanzförmige Umfangsnut 60 für das Haltesegment 48 bilden. Insofern weist jede Radscheibe 22 einen Teil des Nutgrunds und einen Teil der Schwalbenschwanzkontur der Umfangsnut 60 auf. In den Schienen 50 der Haltesegmente 48 ist für jede Verbindungsstelle 54 ein Befestigungsmittel angeordnet. Gemäß FIG 6 kann das Befestigungsmittel als Niet 62 ausgebildet sein. Mit Hilfe der Niet 62, deren nach innen weisendes Ende 63 formschlüssig in der Schiene 50 befestigt ist, kann das Wandsegment 46 zuverlässig und dauerhaft am Haltesegment 48 befestigt werden. Die Vertiefung des Wandsegments 46 im Bereich der Verbindungsstelle 54 ermöglicht, dass der Nietkopf 67 als Verbindungsbestandteil nicht in den Strömungspfad des Verdichters hineinragt, sondern innerhalb der nabenseitig rotationssymmetrischen Hüllfläche 65 angeordnet ist.

Gemäß FIG 7 kann anstelle der Niet 62 auch eine formschlüssig in der Schiene 50 angeordnete Schraube 64 befestigt sein, an der eine Schraubenmutter aufgeschraubt ist. Die Schraubenmutter kann beispielsweise als Schweißmutter 66 oder auch als Bördelmutter 68 vorgesehen sein, wobei nun gemäß FIG 7 sowohl Bördelmutter 68 (links) als auch Schweißmutter 66 (rechts) gleichzeitig dargestellt ist. Es versteht sich von selbst, dass die Schraubenmutter entweder als Bördelmutter 68 ausgestaltet ist oder als Schweißmutter 66. Wenn die Schraubenmutter als Bördelmutter 68 ausgestaltet ist, umfasst sie einen Vorsprung 70, der um die Öffnung des Wandsegments 46 umgebogen werden kann. Die Verwendung einer Schweißmutter 66 sieht vor, dass das Wandsegment - sofern es aus Metall gefertigt ist - an dem Vorsprung 70 der Schweißmutter 66 durch eine Punktschweißung 72 befestigt werden kann.

FIG 6 zeigt zudem ein Wandsegment 46 mit einem Kragen 51. Dieser Kragen 51 erstreckt sich über die gesamte Erstreckung in Umfangsrichtung und ist an beiden Seiten des Wandsegments 46 vorgesehen, um dem Wandsegment 46 eine höhere Steifigkeit zu verleihen.

Die Erfindung kennzeichnet sich nun dadurch, dass anstelle des in FIG 2 gezeigten Rotors 19 der in den Figuren 3 bis 7 beschriebene Rotor 21 dort verwendet werden kann, wobei die Spitzen der freistehenden Leitschaufeln 34 dann den Wandsegmenten 46 gegenüberliegen.

Zwar ist in den Figuren 3 bis 7 dargestellt, dass beidseits des Freiraums 31 die Laufschaufelreihen jeweils Axialnuten aufweisen. Dies ist jedoch nicht zwingend erforderlich. Die Erfindung kann auch dann verwendet werden, wenn lediglich eine der beiden Laufschaufelreihen, welche unmittelbar der Reihe mit freistehenden Leitschaufeln benachbart ist, Axialnuten aufweist.

Der Radius, auf dem die Haltenuten 24 liegen - bezogen auf die Rotationsachse 15 des Rotors 21 - und der Radius, auf der die Umfangsnut 60 zur Befestigung der Haltesegmente 48 angeordnet ist, können so aufeinander abgestimmt sein, dass die Haltesegmente 48 die seitlichen Einführöffnungen 27 der Haltenuten 24 stets frei lassen. In diesem Falle bilden alleine die Wandsegmente 46 die betreffende einseitige Sicherung, die das Verschieben von Laufschaufeln 26 entlang der Haltenut 24 verhindern. Für den Fall, dass die Umfangsnut 60 und die Einführöffnungen 27 der Haltenuten 24 radial überlappen, können zusätzlich die Haltesegmente 48 die Funktion der einseitigen Axialsicherung von Laufschaufeln übernehmen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (21) für eine Strömungsmaschine mit einem im Querschnitt ringförmigen Strömungspfad,
mit zumindest einem endlosen Wellenbund (23), in dem sich zumindest teilweise axial erstreckende Haltenuten (24) mit jeweils einer darin sitzenden Laufschaufel (26) unter Bildung einer Schaufelreihe vorgesehen sind,
**dadurch gekennzeichnet, dass**
an zumindest einer axialen Seite des betreffenden Wellenbundes (23) eine Hinterschneidungen aufweisende endlose Umfangsnut (60) vorgesehen ist, in der zur Hinterschneidungskontur der Umfangsnut (60) korrespondierende Haltesegmente (48) vorgesehen sind, an welchen Haltesegmenten (48) ein mehrere Wandsegmente (46) umfassender Strömungskonturring (44) befestigt ist.

2. Rotor (21) nach Anspruch 1,
der zumindest zwei axial unmittelbar benachbarte Rotorgrundelemente (25) umfasst und bei dem das erste der beiden Rotorgrundelemente (25) den Wellenbund (23) aufweist, wobei die Konturen beider Rotorgrundelemente (25) im Bereich der Umfangsnut (60) so gewählt ist, dass diese Konturen gemeinsam die Umfangsnut (60) samt Hinterschneidungen gestalten.

3. Rotor (21) nach Anspruch 2,
bei dem das zweite der beiden Rotorgrundelemente (25) seitlich der Umfangsnut (60) einen analog zum ersten Rotorgrundelement (25) ausgestalteten Wellenbund (23) mit Haltenuten (24) und Laufschaufeln (26) aufweist.

4. Rotor (21) nach Anspruch 1, 2 oder 3,
bei dem die Haltesegmente (48) nach dem Entfernen zumindest eines der Wandsegmente (46) bzw. vor dem Anbringen des letzten Wandsegments (46) des Strömungskonturrings (44) längs der Umfangsnut (60) verschieblich sind.

5. Rotor (21) nach einem der Ansprüche 1 bis 4,
bei dem die Haltesegmente (48) und/oder die Wandsegmente (46) derartig ausgestaltet sind, dass diese bei vollständiger Montage aller Haltesegmente (48) bzw. der Wandsegmente (46) eine Verschiebung aller Laufschaufeln (26) längs ihrer Haltenut (24) einseitig blockieren.

6. Rotor (21) nach einem der Ansprüche 1 bis 5,
bei dem die Wandsegmente (46) über zumindest eine, vorzugsweise über eine Mehrzahl an Niet-, Schraub-, Schweiß- oder Bördel-Verbindungen an dem Haltesegment (48) befestigt sind.

7. Rotor (21) nach Anspruch 6,
bei dem das Wandsegment (46) an jeder Verbindungsstelle (54) an seiner Außenfläche lokal derartig vertieft ist, dass das Hervorstehen von Verbindungsbestandteilen aus einer Hüllfläche (65) vermieden ist.

8. Rotor (21) nach einem der Ansprüche 1 bis 7,
bei dem die Haltesegmente (48) und/oder die Wandsegmente (46) aus Metall oder aus glas- oder kohlenstofffaserverstärktem Kunststoff gefertigt sind.

9. Rotor (21) nach einem der Ansprüche 1 bis 8,
bei dem eine radial nach außen weisende Fläche der Wandsegmente (46) beschichtet ist.

10. Strömungsmaschine mit einem ringförmigen Strömungspfad, entlang dessen abwechselnd Reihen aus an einem drehfesten Träger befestigte Leitschaufeln (34) und an einem Rotor (21) befestigte Laufschaufeln (26) aufeinander folgen, wobei zumindest eine der Leitschaufelreihen freistehende Leitschaufeln (34) umfasst und zumindest eine der beiden dieser Leitschaufelreihe unmittelbar benachbarten Laufschaufelreihen Laufschaufeln (26) umfasst, die jeweils in sich zumindest teilweise axial erstreckende Haltenuten (24) des Rotors (21) eingesetzt sind,
**dadurch gekennzeichnet, dass**
der Rotor (21) nach einem der Ansprüche 1 bis 9 ausgestaltet ist, derart, dass dessen jeweiliger Strömungskonturring (44) den Spitzen der freistehenden Leitschaufeln (34) gegenüberliegt.

11. Axialverdichter (10) oder Turbine,
ausgestaltet als Strömungsmaschine nach Anspruch 10.

12. Stationäre Gasturbine mit einem Axialverdichter (10) nach Anspruch 11.

13. Verfahren zum Herstellen eines Rotors (21) einer Strömungsmaschine nach Anspruch 2,
bei dem vor dem aneinander Legen der unmittelbar benachbarten Rotorgrundelemente (25) die Haltesegmente (48) in die strukturellen Merkmale einer der beiden Rotorgrundelemente (25) eingelegt werden.
